# EUROPEAN PATENT APPLICATION

(11) **EP 1 197 680 A1**
(43) Date of publication of application: **17.04.2002**
(21) Application number: 00830649.0
(22) Date of filing: 03.10.2000
(51) Int. Cl.: F16H 37/02, F16H 15/52, F16H 15/24

(54) **Continuous speed variator**

(71) Applicant: Lollato, Valeriano A., 57128 Livorno (IT)
(72) Inventor: Lollato, Valeriano A., 57128 Livorno (IT)
(74) Representative: Celestino, Marco

(57) **Abstract**

A method for continuous speed variation of a driven shaft (21), which belongs to a driven unit (20), starting from the movement of a driving unit (10) having a driving axis (11). Friction rollers (14) are provided associated to the driving unit (10) and connected to the driving axis (11) by means of a gearing (17), wherein the friction rollers (14) are arranged in a satellite relationship with respect to the driving axis (11) on an extension thereof towards the driven unit (20) and rotate at opposite speed, with a speed that is multiple with respect to the driving axis (11) according to a predetermined gear ratio (k). The driven unit (20) comprises a hollow body (22) having an inner conical wall (23) against which the friction rollers rollingly engage (14). This way, by diaplacing (x) the conical wall hollow body (22,23) from/towards the driving unit (10) the friction rollers (14) roll on the inner wall (23) of the hollow body (22) in order to contact boundary circular trajectories of diameter (Φ) variable responsive to the movement (x) of the hollow body from/towards the driving unit (10). The axial movement (x) of the hollow body (22) produces an algebraic speed increase or decrease (ω₂) of the driven shaft (21) when the circular envelope of the boundary trajectory of the friction rollers (14) respectively increases or decreases of diameter (Φ).

## Description

### Field of the invention

The present invention relates to a method for adjusting continuously the speed of a driven shaft, that can be used in the motors of cars, of machine tools, etc.

Furthermore the invention relates to a continuous speed variator that carries out this method.

### Description of the prior art

Continuous speed variator exist for said uses, for example as described in US 3823613 and US 5655989.

In US 3823613 a first and a second disk are provided, each with a toroidal surface, having rollers arranged between the two surfaces whose inclination can be adjusted to change the gear ratio. In US 5655989, instead, conical disks are provided having conical portions with concavity oriented towards each other.

In both cases, however, the possibility is neither provided of a zero gear ratio, i.e. with driven gear that is stationary, nor of a negative gear ratio, i.e. of reverse motion.

The need of continuous variators is felt that are capable of controlling at the same time the forward motion, the reverse motion and the position of speed zero with a single movement.

It is therefore object of the present invention to provide a method for continuous speed variation that achieves this target, and to provide also a continuous speed variator capable of carrying it out.

### Summary of the invention

According to a first aspect of the invention a method for continuous speed variation of a driven shaft, which belongs to a driven unit, starting from the movement of a driving unit having a driving axis, has the characteristic that it comprises the steps of:
- arranging a plurality of friction rollers associated to the driving unit and connected to the driving axis by means of a gearing, wherein the friction rollers are arranged in a satellite relationship with respect to the driving axis on an extension thereof towards the driven unit, wherein the friction rollers rotate in opposite direction and with a speed that is multiple with respect to the driving axis according to a predetermined gear ratio, the friction rollers being movable radially with respect to the driving axis;
- arranging a hollow body, having an inner conical wall against which the friction rollers rollingly engage, the conical wall hollow body being associated to the driven unit in a way rotationally integral to the driven axis;
- relative axial movement with respect to the driving unit of the conical wall hollow body from/towards the driving unit along the driven axis, whereby the friction rollers roll on the inner wall of the hollow body in order to contact the walls along boundary circular trajectories of variable diameter responsive to the movement of the hollow body from/towards the driving unit, the relative axial movement of the hollow body with respect to the driving unit creating an algebraic speed increase of the driven shaft when the circular envelope of the boundary trajectory of the friction rollers increases of diameter, and creating a algebraic speed decrease of the driven shaft when the circular envelope of the boundary trajectory of the friction rollers decreases of diameter.

Advantageously, the geometry of the hollow body is such that a position is provided of the hollow body wherein the friction rollers roll without sliding against the walls.

According to another aspect of the invention a continuous speed variator arranged between a driving unit with a driving axis and a driven unit with a driven axis has the characteristic that it comprises:
- a plurality of friction rollers associated to the driving unit and connected to the driving axis by means of means for transmission, whereby the friction rollers are arranged in a satellite relationship with respect to the driving axis on an extension thereof towards the driven unit, wherein the friction rollers rotate in opposite direction and with a speed that is multiple with respect to the driving axis according to a predetermined gear ratio,
- a hollow body having an inner conical wall against which the friction rollers rollingly engage, the conical wall hollow body being associated to the driven unit in a way rotationally integral to the driven axis;
- means for displacing the conical wall hollow body from/towards the driving unit, whereby the friction rollers roll on the inner wall of the hollow body in order to contact the walls along boundary circular trajectories of variable diameter responsive to the movement of the hollow body from/towards the driving unit.

Means can be provided for automatically adjusting the radial position of the friction rollers with respect to the driving axis.

Preferably, the means for adjusting the radial position of the friction rollers comprise axles that are swinging with respect to the gear box by means of an omokinetic coupling, whereby the centrifugal force adapts the rollers to envelope trajectories of different diameter in the hollow body.

Alternatively, centrifugal force adapts the rollers to envelope trajectories of different diameter in the hollow body by friction rollers that are mounted on axles mounted eccentrically on supports that are connected pivotally to the driving unit, wherein said axles can move according to radial translations.

The main characteristics of the invention are defined by the independent claims. The dependent claims define the preferred embodiments of the invention same.

### Brief description of the drawings

Further characteristics and the advantages of the method of continuous speed variation and of the corresponding variator will be made clearer with the following description of an embodiment thereof, exemplifying but not limitative, with reference to the attached drawings, wherein:
- figure 1 is a sectional diagrammatical view that shows the principle of operation of the variator according to the invention in two operative positions;
- figure 2 shows the overlapping of the positions of figure 1;

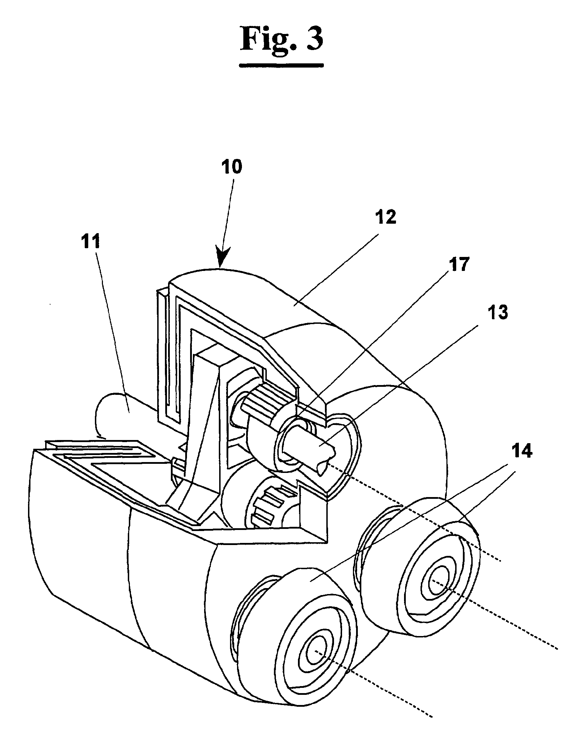

- figure 3 shows a perspective view of the driving unit of a continuous speed variator according to the invention;

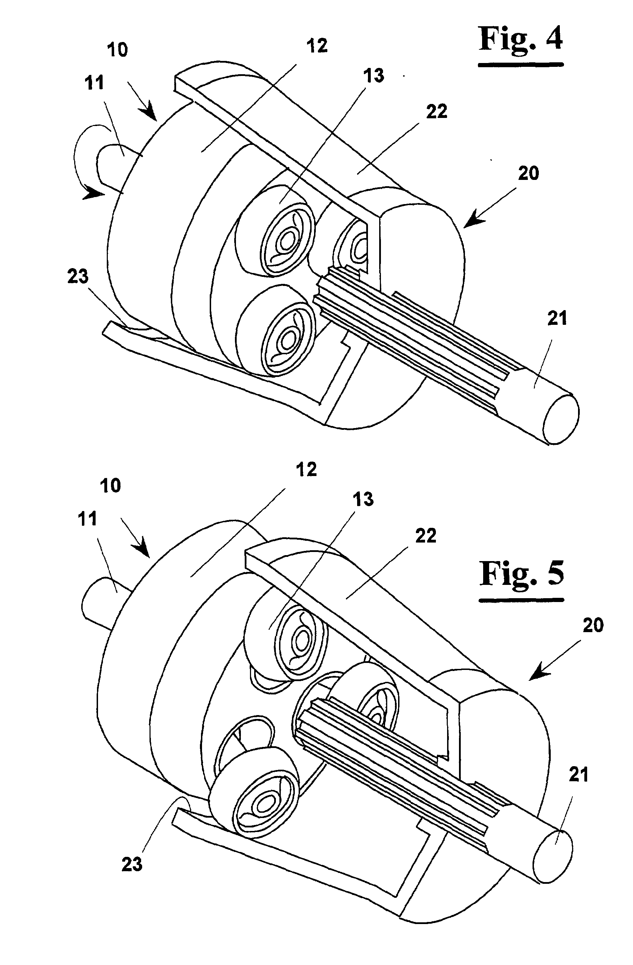

- figure 4 shows the driving unit of figure 3 inserted in the hollow body of a driven unit;
- figure 5 shows the variator of figure 4 in a different relative position between driving unit and driven;
- figure 6 is a diagrammatical geometric view that shows the equation between the speed of the driven axis and the speed of the driving axis;
- figure 7 is a diagram that shows the variation of speed of the driven axis for adjusting the rolling circumference of the rollers,
- figures 8 and 9 are an example of geometric ratio between two different positions of the hollow body of the driven unit with respect to the driving unit.
- figure 10 is a perspective section of the driving unit that shows a balancing device of the rollers;
- figure 11 shows the possibility of angular adjustment of the driving unit for giving a helical rotation to the rollers;

### Description of a preferred embodiment

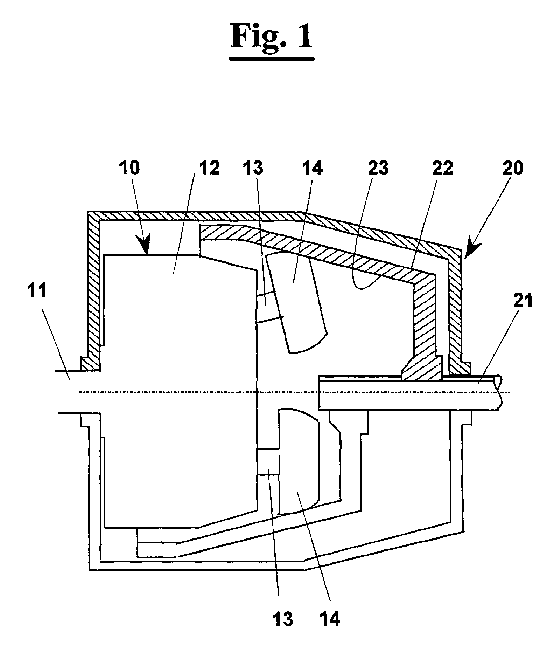

With reference to figure 1 a gear ratio variator or speed variator according to the invention extends along a single axis and comprises two parts; a driving unit 10 associated to a driving shaft 11 and a driven unit 20 associated a driven shaft 21.

The driving unit 1 has a gear box 12 in which driving shaft 11 is housed and from which three axles 13 protrude having at the ends friction rollers 14. Friction rollers 14 are arranged in a satellite relationship with respect to shaft 11 and spaced 120° from one another.

Friction rollers 14 have the possibility of adjusting their distances with respect to the axis of driving shaft 11 and at the same time rotate in opposite direction with respect to the latter. For example, if driving shaft 11 rotates clockwise, rollers 14 rotate counter-clockwise with a predetermined gear ratio. If this ratio is 1/3, every time the driving shaft does a complete turn, the rollers do three complete turn in the opposite direction, in addition to a complete revolution about driving axis 11.

Driven unit 20 comprises a hollow body 22 slidingly engaging with shaft 21, which for example has to this purpose a grooved portion in order to allow the sliding while being at the same time rotationally integral to it. Hollow body 22 in the present example is arranged in order to have concavity turned towards driving shaft 11. Its inner conical wall 23 contacts rollers 14.

In a precise "neutral" sliding position of hollow body 22 on grooved shaft 21, the combination of the integral rotation of driving unit 10 at the speed of driving shaft 11 and of the speed of opposite rotation about axles 13 of friction rollers 14 causes the latter to roll without sliding on conical wall 23. In this case, the driven unit remains stationary with respect to a fixed support, since it does not receive any driving action. A situation of not transmission is thus created, as if an idle position of the gear were present wherein the driving shaft rotates and the driven shaft is stationary. with respect to the traditional idle position, however, in the variator according to the invention the driven shaft is braked.

With a forward or reverse motion with respect to the driven shaft 21 of hollow body 22 the circumference of rolling of the friction rollers 14 changes. The rollers, then, since they have fixed gear ratio with respect to driving shaft 11, cannot any more roll without sliding on conical wall 23, and a sliding component is determined that is annulled by the rotation of driven unit 20 owing to the friction of rollers 14 against conical wall 23.

More precisely, the rotation of driven unit 20 has the same direction of driving unit 10 if the circular envelope of the boundary trajectory of friction rollers 14 on wall 23 is higher than the position of not transmission. On the contrary, the rotation of driven unit 20 has opposite direction with respect to driving unit 10 if the circular envelope of the boundary trajectory of friction rollers 14 on wall 23 is lower than the position of stationary transmission.

When designing the variator, within certain limits, the following parameters can be changed:
- gear ratio k between friction rollers 14 and driving shaft 11;
- position Φ₀ of the circular envelope of the boundary trajectory for which there is the idle transmission between driving unit 10 and driven unit 20;
- angle of inclination of conical wall 23;
- stroke that hollow body 22 can effect on grooved shaft 21.

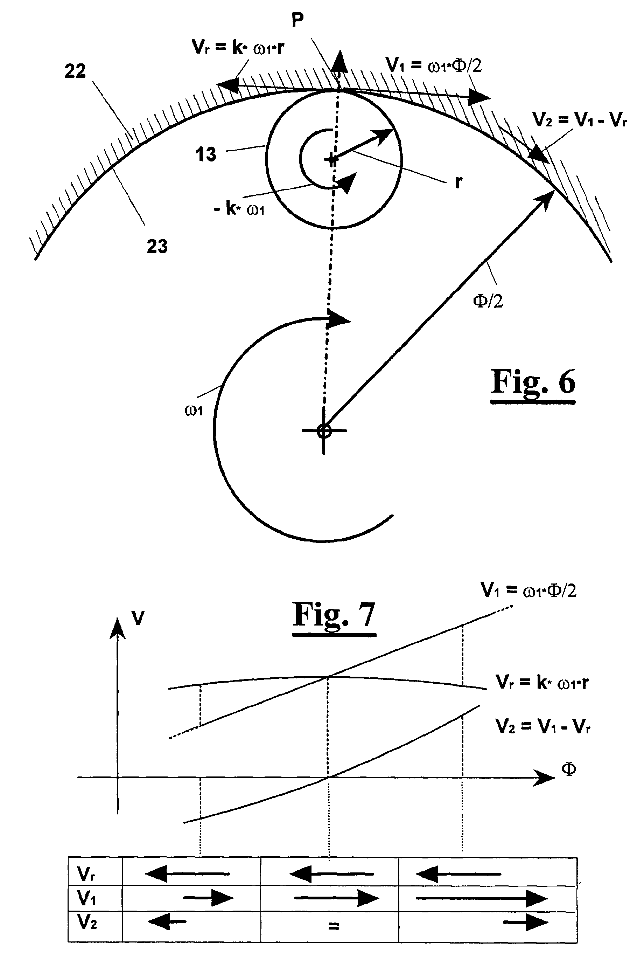

With reference to figures 6 and 7, for a speed ω₁ of shaft 11 rollers 14 rotate at a speed -k*ω₁, wherein k is the gear ratio between rollers 14 and shaft 11. Therefore, at an instantaneous point P of contact between rollers 14 and conical surface 23, the boundary speed of the rollers is Vᵣ = -k* ω1*r, wherein r is the radius of rollers 14. Point P, furthermore, belongs instantaneously to the driving unit, and has a boundary speed V₁ = ω1*Φ/2, wherein Φ is the inner diameter of conical surface 23 sectioned with a transversal plane passing through P. Therefore, boundary dragging speed V₂ of hollow body 22 by means of the action of rollers 14 is V₂ = V₁ + V₀.

The speed of the driven unit is ω₂ =2*V2 /Φ = 2*V₁ + Vᵣ /Φ = ω₁(1-2kr/Φ).

In absolute values, V₂ =0 when V₁ = V₀ i.e. Φ=Φ₀ =2*k*r, wherein Φ₀ corresponds to the relative position between the hollow body and the driving unit at point P where the driven unit is stationary with respect to the driving unit. Position Φ₀ is independent from the driving unit speed, whereby it can be found geometrically in the speed variator according to the invention. In the particular case of k=3, then Φ_{D} = 6*r, wherein Φ₀ is the diameter of wall 23 for which the speed of the driven unit is zero.

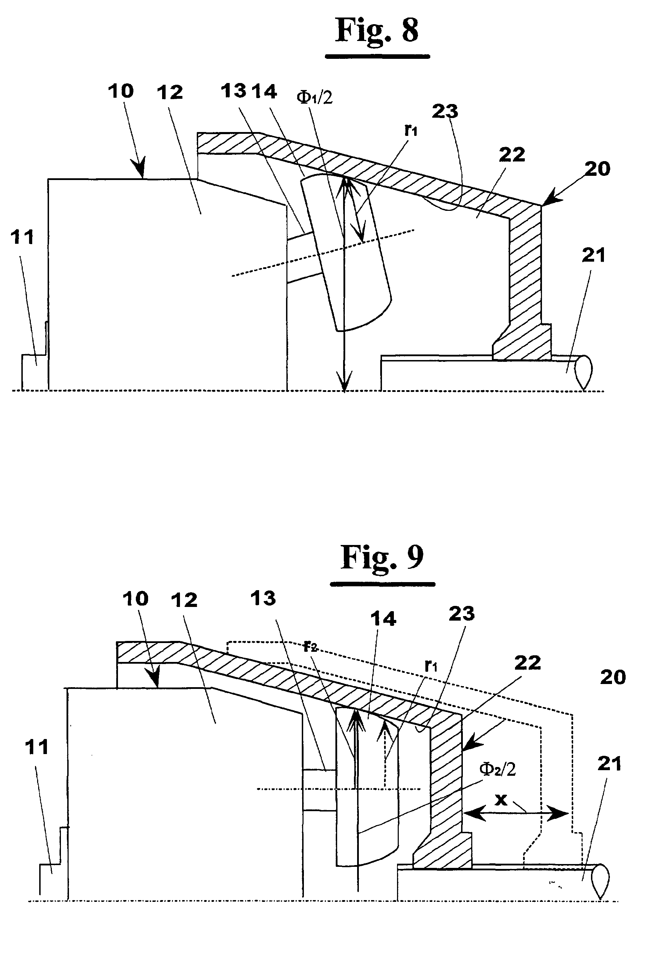

With reference also to figures 8 and 9, if hollow body 22 has a movement relative x with respect to driving unit 10, owing to its sliding on the grooved portion of shaft 21, diameter Φ changes from Φ₁ into Φ₂, wherein Φ₂ - Φ₁ = 2 * x * tg(α) and α is the inclination of conical surface 23.

Always with reference to figures 8 and 9, therefore, movement x of hollow body 22 varies the position of P from Φ₂ to Φ₁ whereby a control of speed ω₂ is obtained with the possibility of reversing ω₂ if Φ₂ and Φ₁ are opposite with respect to neutral position Φₙ.

According to the invention the grip of rollers 14 onto wall 23 depends on their centrifugal force and on their high boundary speed owing to gear ratio k, which is multiple with respect to the driving shaft. For example nine turns of axles 13 of rollers 14 and three revolutions with respect to shaft 11 of driving unit 10 are necessary for a single turn of axis 21 of driven unit 20.

The driving force of the rollers on hollow body 22 is distributed on long linear paths. The combination of the pressure of the centrifugal force with the boundary speed of the rollers increases the grip of the same on conical wall 23, whereby a sufficient gear ratio is reached for forward and reverse motion of the variator,

Rotation ω₂ of the driven axis for every revolution of rollers 14 has as upper limit, i.e when the rollers touch one another in the point of maximum approach x of cone 22 and driving unit 10.

With respect to existing variators that have friction rollers, wherein a direct connection is present that causes a reduced rotation of the rollers when transmitting the motion to the cone, according to the invention rollers 14, which mostly roll on hollow body 22, turn faster and effect full revolutions about the main axis. This way, the stress between roller and conical wall is distributed for a long linear contact zone.

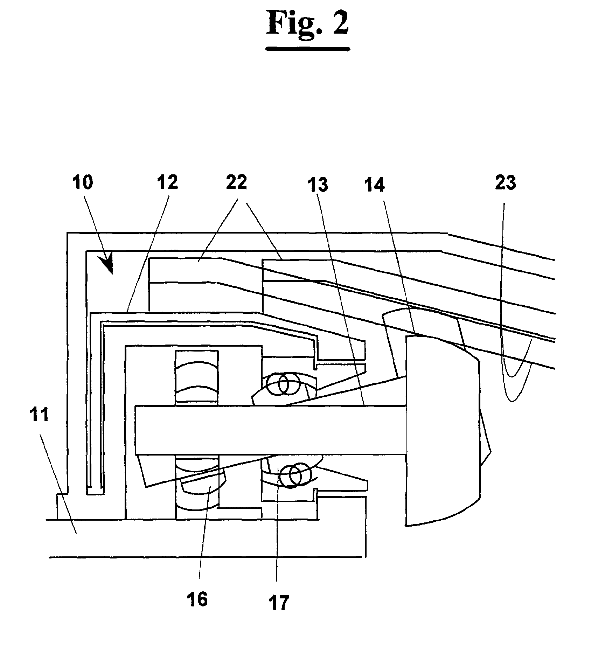

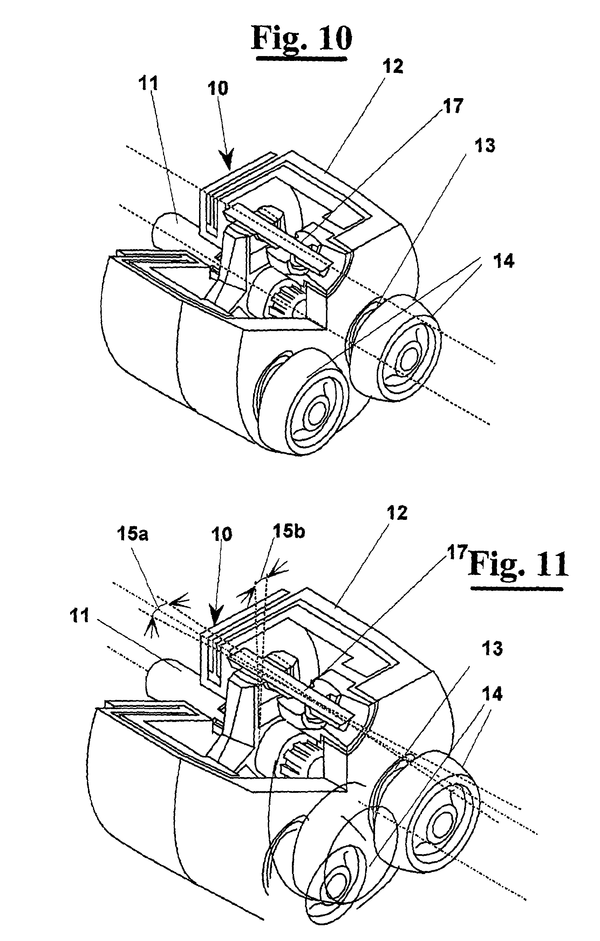

According to a preferred embodiment of the invention (figure 2 and 10), to avoid an excessive wear of rollers 14 and hollow body 22 in case of high speeds, a kinetic balancing system may be used that, by adjusting axles 13 of rollers 14, compensates the increase of pressure in the contact points on the cone, owing to the centrifugal force balanced by weights 16 present on axles 13 opposite to homokinetic spherical couplings 17.

The grip of rollers 14 to conical wall 23 is, as already said, assured by the centrifugal force that pushes radially the weights 16 of the rollers. In the case of internal combustion engines or power electric motors, the minimum speed rate is sufficient to assure a sufficient centrifugal force for a grip of rollers 14 on conical wall 23.

The speed variator according to the invention can also be used with motors with lower number of turns at the startup. In this case, an auxiliary gripping system is necessary that is switched on at a low number of turns for assuring the grip and switched off when the centrifugal force has reached a number of turns sufficient for assuring the grip.

With reference to figure 11, it is also possible to adjust the relative position between rollers 14 and driving shaft 11, so that rollers 14 have an helical motion, whereby the movement of driven unit 20 is enhanced and the wear of the same is reduced. The angle 15a or 15b that is chosen between the support of the rollers and shaft 11 is very low, normally less than 1°, and it is correlated to the number of turns of driving unit 10 and with the movement of hollow body 22 along shaft 21.

The speed variator according to the invention allows:
- continuously variable speed ratio with the possibility of choice of the direction of rotation among clockwise, counter-clockwise and stationary;
- high torque, since for each turn of the driven unit the rollers of the driving unit carry out full revolutions in the hollow body of the driven unit, avoiding the loss of grip;
- hydraulic devices are not necessary, which reduce the efficiency of the system and are expensive, for assuring the grip of the rollers of the driving unit on the driven unit, owing to the pressure of the centrifugal force;
- the wear of the parts (rollers-conical body) is lower or in any case not higher than that of continuous variators for cars according to the prior art;
- a reduction of the wear of the machine or of the vehicle that uses the variator according to the invention is obtained, owing to the possibility of choosing, according to the torque and power of the motor, the optimum gear ratio for an ideal drive without any losses;
- easy automatic electronic control of the gear ratio responsive to the power needed.

### Example

In figures 9A and 9B the following example is given:

| | cone radius | roller radius | rotation of driven axis for every driving unit revolution |
|---|---|---|---|
| Figure 8 | Φ₁ = 13,5 cm | r₁ = 4,5 cm | 0° ω₂ = 0 |
| Figure 9 | Φ₂ = 12,0 cm | r₂ = 5,0 cm | 90° ω₂ = ω₁/4 |

Notwithstanding reference has been made to a body 22 with conical inner walls 23, it is not excluded that the walls 23 have curvilinear shape, for example rounded in a way convex or concave. This way, the gear ratio is varied in a not linear way.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for continuous speed variation of a driven shaft (21), which belongs to a driven unit (20), starting from the movement of a driving unit (10) having a driving axis (11), **characterised in that** it comprises the steps of:
- arranging a plurality of friction rollers (14) associated to said driving unit (10) and connected to said driving axis (11) by means of a gearing (17), wherein said friction rollers (14) are arranged in a satellite relationship with respect to said driving axis (11) on an extension thereof towards said driven unit (20) and rotate at an opposite speed that is multiple with respect to said driving axis (11) according to a predetermined gear ratio (k);
- arranging a hollow body (22) having an inner conical wall (23) against which said friction rollers rollingly engage (14), said conical wall hollow body (22,23) being associated to said driven unit (20) in a way rotationally integral to said driven axis (21);
- relative axial movement (x) of said conical wall hollow body (22,23) from/towards said driving unit (10), whereby said friction rollers (14) roll on the inner wall of said hollow body (22) in order to contact said walls (23) along boundary circular trajectories of variable diameter (Φ) responsive to the movement (x) of said hollow body from/towards said driving unit (10), the axial movement (x) of said hollow body creating an algebraic speed decrease (ω₂) of said driven shaft (21) when the circular envelope of the boundary trajectory of said friction rollers (14) increases of diameter, and creating a algebraic speed decrease of said driven shaft (21) when the circular envelope of the boundary trajectory of said friction rollers (14) decreases of diameter.

2. A method for continuous speed variation of a driven shaft (21), according to claim 1, wherein a position is provided of said hollow body (22) wherein said friction rollers (14) roll without sliding against said walls (23).

3. .A method for continuous speed variation of a driven shaft (21), according to claim 1, wherein the radial position of the friction rollers (14) with respect to the driving axis (11) is automatically adjusted with a sufficient grip on the walls (23) of the hollow body (22) by means of centrifugal force.

4. A continuous speed variator arranged between a driving unit (10) with a driving axis (11) and a driven unit (20) with a driven axis (21) **characterised in that** it comprises:
- a plurality of friction rollers (14) associated to said driving unit (10) and connected to said driving axis (11) by means of a gearing (16) of a gear box (12), wherein said friction rollers (14) are arranged in a satellite relationship with respect to said driving axis (11) on an extension thereof towards said driven unit (20) and rotate in opposite direction and with a speed that is multiple with respect to said driving axis (11) according to a predetermined gear ratio (k);
- a hollow body having an inner conical wall (23) against which said friction rollers rollingly engage (14), said conical wall hollow body (22,23) being associated to said driven unit (20) in a way rotationally integral to said driven axis (21);
- means for displacing said conical wall hollow body (22,23) from/towards said driving unit (10), whereby said friction rollers (14) roll on the inner wall of said hollow body in order to contact said walls along boundary circular trajectories of variable diameter (Φ) responsive to the movement (x) of said hollow body from/towards said driving unit (10).

5. Variator according to claim 4, wherein means are provided (16,17) for automatically adjusting the radial position of the friction rollers (14) with respect to the driving axis (11);

6. Variator according to claim 5, wherein the means for adjusting the radial position of the friction rollers comprise axles (13) swinging with respect to said gear box (12) by means of an omokinetic coupling (17), whereby centrifugal force adapts the rollers to envelope trajectories of different diameter (Φ)in the hollow body (22).

7. Variator according to claim 5, wherein centrifugal force adapts the rollers to envelope trajectories of different diameter in the hollow body by means of friction rollers (14) that move according to radial translations.

8. Variator according to claim 5, wherein the relative position between rollers (14) and driving shaft (11) is adjustable rotationally (15a or 15b) whereby the rollers (14) have a movement slightly helical with respect to the driven unit (20).

9. Variator according to claim 4, wherein said hollow body (22) has a curved inner wall (23).
